# EUROPEAN PATENT APPLICATION

(11) **EP 4 510 663 A1**
(43) Date of publication of application: **19.02.2025**
(21) Application number: 22936920.2
(22) Date of filing: 14.04.2022
(51) Int. Cl.: H04W 12/06

(54) **AUTHENTICATION METHOD AND DEVICE**

(71) Applicant: Beijing Xiaomi Mobile Software Co., Ltd., Beijing 100085 (CN)
(72) Inventor: SHANG, Zhengyi, Beijing 100085 (CN); LU, Wei, Beijing 100085 (CN)
(74) Representative: Dehns Germany Partnerschaft mbB
(86) International application number: PCT/CN2022/086928
(87) International publication number: WO 2023/197272

(57) **Abstract**

The present disclosure provides an authentication method and device, which relate to the field of communications. The technical scheme of the present application comprises: a UDM network element receives a network authentication procedure trigger instruction from an AUSF network element, and sends an authentication notification message to the AMF network element in response to the network authentication procedure trigger instruction, thereby realizing the mechanism of triggering a UE network authentication procedure from the network side, and significantly improving the continuity and safety of the network service.

## Description

### TECHNICAL FIELD

The present disclosure relates to a field of mobile communication technologies, and particularly to an authentication method and an apparatus thereof.

### BACKGROUND

In a mobile network communication system, a user equipment (UE) can initiate a network authentication procedure to achieve a bidirectional authentication between the UE side and the network side and provide information required for a subsequent security procedure, such as an authentication server function (AUSF) network element key. However, in the current mobile network communication system, the network side does not have a mechanism to trigger the network authentication procedure for the UE. Therefore, in a case that the information required for the security procedure needs to be updated, there is a possibility that a network service may be interrupted due to the UE failing to initiate the network authentication procedure in time.

### SUMMARY

The present disclosure provides an authentication method and an apparatus thereof, which provides a mechanism to enable the network to trigger a network authentication procedure for a UE, capable of greatly improving continuity and security of a network service.

In a first aspect of embodiments of the present disclosure, an authentication method is provided. The method is performed by a unified data management (UDM) network element and includes: receiving a network authentication procedure trigger indication from an authentication server function (AUSF) network element, in which, the network authentication procedure trigger indication includes an identifier of a user equipment (UE) corresponding to the AUSF network element, and the network authentication procedure trigger indication indicates the UDM network element to trigger a network authentication procedure for the UE; and sending an authentication notification message to an access and mobility management function (AMF) network element, in which, the authentication notification message includes the identifier of the UE, and the authentication notification message notifies the AMF network element to perform the network authentication procedure for the UE.

Optionally, the authentication notification message further includes access type information, and the access type information indicates an access type applicable for the network authentication procedure initiated, the access type includes 3rd generation partnership project (3GPP) access and/or non-3GPP access.

Optionally, the network authentication procedure trigger indication and the authentication notification message further include an authentication cause for which the AUSF network element requests to trigger the network authentication procedure, and the authentication cause includes at least one of: a steering of roaming counter reaching an upper limit; and a UE parameter update counter reaching an upper limit.

Optionally, the authentication notification message further includes a confirmation request indication for requesting an authentication notification acknowledgement message from the AMF network element, and the authentication notification acknowledgement message indicates that the AMF network element has requested the UE to perform the network authentication procedure.

In a second aspect of embodiments of the present disclosure, an authentication method is provided. The method is performed by an authentication server function (AUSF) network element, and includes: sending a network authentication procedure trigger indication to a unified data management (UDM) network element, in which, the network authentication procedure trigger indication includes an identifier of a user equipment (UE) corresponding to the AUSF network element, and the network authentication procedure trigger indication indicates the UDM network element to trigger a network authentication procedure for the UE.

Optionally, the network authentication procedure trigger indication further includes an authentication cause for which the AUSF network element requests to trigger the network authentication procedure, and the authentication cause includes at least one of: a steering of roaming counter reaching an upper limit; and a UE parameter update counter reaching an upper limit.

Optionally, the method further includes: after confirming that the network authentication procedure is completed, generating a new AUSF network element key, and resetting values of the steering of roaming counter and the UE parameter update counter.

In a third aspect of embodiments of the present disclosure, an authentication method is provided. The method is performed by an access and mobility management function (AMF) network element, and includes: receiving an authentication notification message from a unified data management (UDM) network element, in which, the authentication notification message includes an identity of a user equipment (UE), and the authentication notification message notifies the AMF network element to perform a network authentication procedure for the UE; sending an authentication request to the UE via an NAS connection between the AMF network element and the UE, in which, the authentication request requests the UE to perform the network authentication procedure; and receiving an authentication response from the UE, in which, the authentication response includes information required to perform the network authentication procedure.

Optionally, the method further includes: sending a paging message to the UE to create the NAS connection.

Optionally, the authentication notification message further includes a confirmation request indication for requesting an authentication notification acknowledgement message from the AMF network element, and the method further includes: sending the authentication notification acknowledgement message to the UDM network element, in which, the authentication notification acknowledgement message indicates that the AMF network element has requested the UE to perform the network authentication procedure.

Optionally, the method further includes: performing security protection on the authentication request based on an NAS security context locally stored.

Optionally, the method further includes: updating the NAS security context locally stored after the network authentication procedure is completed.

In a fourth aspect of embodiments of the present disclosure, an authentication method is provided. The method includes: sending, by an authentication server function (AUSF) network element, a network authentication procedure trigger indication to a unified data management (UDM) network element, wherein the network authentication procedure trigger indication comprises an identifier of a user equipment (UE) corresponding to the AUSF network element, and the network authentication procedure trigger indication indicates the UDM network element to trigger a network authentication procedure for the UE; sending, by the UDM network element, an authentication notification message to an access and mobility management function (AMF) network element in response to the network authentication procedure trigger indication, wherein the authentication notification message comprises the identity of the UE and notifies the AMF network element to perform the network authentication procedure for the UE; sending, by the AMF network element, an authentication request to the UE, wherein the authentication request requests the UE to perform the network authentication procedure; and receiving, by the AMF network element, an authentication response from the UE, wherein the authentication response comprises information required to perform the network authentication procedure.

Optionally, the authentication notification message includes a confirmation request indication for requesting an authentication notification acknowledgement message from the AMF network element, and the method further includes: sending, by the AMF network element, the authentication notification acknowledgement message to the UDM network element, in which, the authentication notification acknowledgement message indicates that the AMF network element has requested the UE to perform the network authentication procedure.

Optionally, the method further includes: after the network authentication procedure is completed, generating, by the AUSF network element, a new AUSF network element key, and resetting a steering of roaming counter and a UE parameter update counter.

Optionally, the authentication notification message and the authentication request further include access type information, and the access type information indicates an access type applicable for the network authentication procedure initiated, the access types includes 3rd generation partnership project (3GPP) access and/or non-3GPP access.

Optionally, the network authentication procedure trigger indication and the authentication notification message further include an authentication cause for which the AUSF network element requests to trigger the network authentication procedure, and the authentication cause includes at least one of: a steering of roaming counter reaching an upper limit; and a UE parameter update counter reaching an upper limit.

In a fifth aspect of embodiments of the present disclosure, an authentication apparatus is provided. The apparatus, for a unified data management (UDM) network elements, includes a transceiver module, configured to: receive a network authentication procedure trigger indication from an authentication server function (AUSF) network element, in which, the network authentication procedure trigger indication includes an identifier of a user equipment (UE) corresponding to the AUSF network element, and the network authentication procedure trigger indication indicates the UDM network element to trigger a network authentication procedure for the UE; and send an authentication notification message to an access and mobility management function (AMF) network element, in which, the authentication notification message includes the identifier of the UE, and the authentication notification message notifies the AMF network element to perform the network authentication procedure for the UE.

In a sixth aspect of embodiments of the present disclosure, an authentication apparatus is provided. The apparatus, for a network authentication server function (AUSF) network element, includes a transceiver module, configured to: send a network authentication procedure trigger indication to a unified data management (UDM) network element, wherein the network authentication procedure trigger indication comprises an identifier of a user equipment (UE) corresponding to the AUSF network element, and the network authentication procedure trigger indication indicates the UDM network element to trigger a network authentication procedure for the UE.

In a seventh aspect of embodiments of the present disclosure, an authentication apparatus is provided. The apparatus, for an access and mobility management function (AMF) network element, includes a transceiver module, configured to: receive an authentication notification message from a unified data management (UDM) network element, wherein the authentication notification message comprises an identity of a user equipment (UE), and the authentication notification message notifies the AMF network element to perform a network authentication procedure for the UE; send an authentication request to the UE via an NAS connection between the AMF network element and the UE, wherein the authentication request requests the UE to perform the network authentication procedure; and receive an authentication response from the UE, wherein the authentication response comprises information required to perform the network authentication procedure.

In an eighth aspect of embodiments of the present disclosure, an authentication system is provided. The system includes an authentication server function (AUSF) network element, a unified data management (UDM) network element, and an access and mobility management function (AMF) network element, in which, the AUSF network element is configured to send a network authentication procedure trigger indication to a unified data management (UDM) network element, in which the network authentication procedure trigger indication includes an identifier of a user equipment (UE) corresponding to the AUSF network element, and the network authentication procedure trigger indication indicates the UDM network element to trigger a network authentication procedure for the UE; the UDM network element is configured to receive the network authentication procedure trigger indication from the AUSF network element, and send an authentication notification message to the AMF network element in response to the network authentication procedure trigger indication, in which, the authentication notification message includes the identity of the UE and notifies the AMF network element to perform the network authentication procedure for the UE; the AMF network element is configured to send an authentication request to the UE and receive an authentication response from the UE, in which, the authentication request requests the UE to perform the network authentication procedure, and the authentication response includes information required to perform the network authentication procedure.

In a ninth aspect of embodiments of the present disclosure, a communication device is provided. The communication device includes a transceiver, a memory, and a processor, coupled to the transceiver and the memory respectively, and configured to execute computer executable instructions stored in the memory, control transmission and reception of wireless signals of the transceiver, and be able to implement the authentication method of the first aspect of embodiments, or the second aspect of embodiments, or the third aspect of embodiments.

In a tenth aspect of embodiments of the present disclosure, there is provided a computer storage medium for storing computer executable instructions. When the computer executable instructions are executed by a processor, the authentication method of the first aspect of embodiments, or the second aspect of embodiments, or the third aspect of embodiments is implemented.

Embodiments of the present disclosure provide the authentication method and apparatus. The UDM network element receives the network authentication procedure trigger indication from the AUSF network element, and sends the authentication notification message to the AMF network element in respond to the network authentication procedure trigger indication, thus realizing a mechanism to enable the network to trigger the network authentication procedure for the UE, capable of greatly improving continuity and security of a network service.

Additional aspects and advantages of the present disclosure will be partially given in the following description, and some will become obvious from the following description, or be understood through practice of the present disclosure.

### BRIEF DESCRIPTION OF THE DRAWINGS

The above-mentioned and/or additional aspects and advantages of the present disclosure will be apparent and readily understood from the following description of embodiments taken in conjunction with the accompanying drawings, in which:
FIG. 1 is a flowchart illustrating an authentication method according to an embodiment of the present disclosure.
FIG. 2 is a flowchart illustrating an authentication method according to an embodiment of the present disclosure.
FIG. 3 is a flowchart illustrating an authentication method according to an embodiment of the present disclosure.
FIG. 4 is a flowchart illustrating an authentication method according to an embodiment of the present disclosure.
FIG. 5 is a flowchart illustrating an authentication method according to an embodiment of the present disclosure.
FIG. 6 is a flowchart illustrating an authentication method according to an embodiment of the present disclosure.
FIG. 7 is a flowchart illustrating an authentication method according to an embodiment of the present disclosure.
FIG. 8 is a flowchart illustrating an authentication method according to an embodiment of the present disclosure.
FIG. 9 is a flowchart illustrating an authentication method according to an embodiment of the present disclosure.
FIG. 10 is a flowchart illustrating an authentication method according to an embodiment of the present disclosure.
FIG. 11 is a flowchart illustrating an authentication method according to an embodiment of the present disclosure.
FIG. 12 is a flowchart illustrating an authentication method according to an embodiment of the present disclosure.
FIG. 13 is a flowchart illustrating an authentication method according to an embodiment of the present disclosure.
FIG. 14 is a flowchart illustrating an authentication method according to an embodiment of the present disclosure.
FIG. 15 is a block diagram illustrating an authentication apparatus according to an embodiment of the present disclosure.
FIG. 16 is a block diagram illustrating an authentication apparatus according to an embodiment of the present disclo sure.
FIG. 17 is a block diagram illustrating an authentication apparatus according to an embodiment of the present disclosure.
FIG. 18 is a block diagram illustrating an authentication apparatus according to an embodiment of the present disclosure.
FIG. 19 is a block diagram illustrating an authentication apparatus according to an embodiment of the present disclosure.
FIG. 20 is a block diagram illustrating an authentication apparatus according to an embodiment of the present disclosure.
FIG. 21 is a block diagram illustrating an authentication apparatus according to an embodiment of the present disclosure.
FIG. 22 is a schematic diagram illustrating a structure of a communication device according to an embodiment of the present disclosure.
FIG. 23 is a schematic diagram illustrating a structure of a chip according to an embodiment of the present disclosure.

### DETAILED DESCRIPTION

Embodiments of the present disclosure are described in detail below, examples of which are illustrated in the accompanying drawings, wherein the same or similar reference numerals represent the same or similar elements or elements having the same or similar functions throughout. The embodiments described below with reference to the accompanying drawings are exemplary and intended to explain the present disclosure and are not to be construed as limitations of the present disclosure.

To protect steering of roaming (SoR)/UE parameter update (UPU) services, an authentication server function (AUSF) network element and a user equipment (UE) shall maintain a steering of roaming counter Counter_{SoR}/a UE parameter update counter Counterupu for a lifetime of an AUSF network element key K_{AUSF}. When a newly generated K_{AUSF} is stored, the Counter_{SoR} is set to 0x00 0x01, and the Counter_{UPU} is set to 0x00 0x01, and the Counter_{SoR}/Counter_{UPU} monotonically increases with every computation of a Hash value of an SoR message SoR-MAC-I_{AUSF}/a Hash value of a UPU message UPU-MAC-I_{AUSF} at the AUSF network element side. Once the Counter_{SoR}/Counter_{UPU} associated with the K_{AUSF} reaches an upper limit, the AUSF network element shall suspend a SoR/UPU protection service for the UE. Only when a new K_{AUSF} is regenerated for the UE, the Counter_{SoR}/Counter_{UPU} can be reset and the AUSF can resume the SoR/UPU protection service for the UE. Therefore, it is necessary to refresh the K_{AUSF} timely before the K_{AUSF} becomes invalid.

A network authentication procedure enables mutual authentication between the UE and the network and provides information in subsequent security procedures. After successful completion of the network authentication procedure, the new key K_{AUSF} may be generated. In the current mobile communication network, the network does not have a mechanism to trigger the network authentication procedure for the UE, the UE may be attached to a network for a long time by using the same K_{AUSF} without refreshing the K_{AUSF}, which may cause interruption of the SoR/UPU protection service or even a network service. For the view of security, there is an urgent need to specify a mechanism to enable the network to trigger the network authentication procedure for the UE and address the introduced security threats. The purpose of network-triggered network authentication procedure for the UE can greatly improve continuity and security of the network service.

When the Counter_{SoR}/Counter_{UPU} reaches the upper limit, partial network functions (NFs) on a core network side may detect unavailability of the K_{AUSF} and notify the UE to run the network authentication procedure without suspending the SoR/UPU services for the UE. However, in the current mobile network communication system, the network authentication procedure is mainly initiated by the UE, by sending a registration request to an access and mobility mangement function (AMF). The NFs on a core network side do not have the mechanism to trigger the network authentication procedure for the UE, which may introduce additional security threats and lower the service quality.

In view of this, the present disclosure provides an authentication method and an apparatus thereof, which provides a mechanism to enable a network to trigger a network authentication procedure for a UE, capable of greatly improving continuity and security of a network service.

An authentication method and an apparatus thereof according to the present disclosure are introduced in detail below with reference to the accompanying drawings.

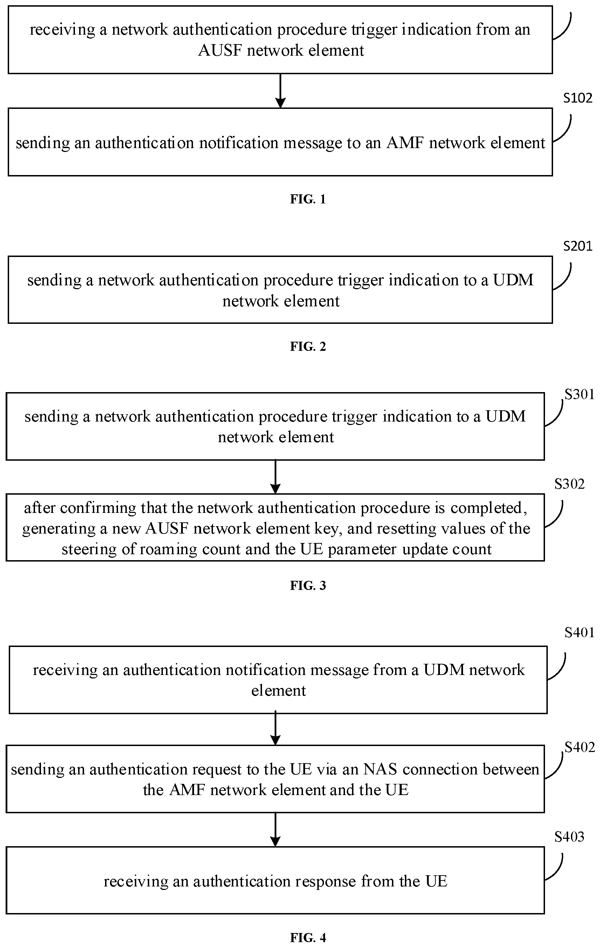

FIG. 1 is a flowchart illustrating an authentication method according to an embodiment of the present disclosure. As illustrated in FIG. 1, the method may be performed by a UDM network element and may include following steps.

At step S101, a network authentication procedure trigger indication is received from an AUSF network element.

The network authentication procedure trigger indication includes an identifier of a user equipment (UE) corresponding to the AUSF network element, and the network authentication procedure trigger indication indicates the UDM network element to trigger a network authentication procedure for the UE.

At step S102, an authentication notification message is sent to an AMF network element.

The authentication notification message includes the identifier of the UE, and the authentication notification message notifies the AMF network element to perform the network authentication procedure for the UE.

In this embodiment, the UDM network element may receive the network authentication procedure trigger indication carrying the identity of the UE corresponding to the AUSF network element from the AUSF network element. After receiving the network authentication procedure trigger indication, the UDM network element may send the authentication notification message to the AMF network element in response to the network authentication procedure trigger indication, to notify the AMF network element to perform the network authentication procedure for the UE.

For example, in a case that the AUSF network element determines that the AUSF network element key K_{AUSF} needs to be regenerated, such as the current K_{AUSF} is invalid, the AUSF network element may send the network authentication procedure trigger indication to the UDM network element.

The identity of the UE may be a generic public subscription identifier (GPSI) or a subscription permanent identifier (SUPI).

For a specific implementation of the network authentication procedure for the UE, reference may be made to a network authentication procedure in the related art. For example, the specific implementation of the network authentication procedure shown in the present disclosure is similar to an implementation of a network authentication procedure initiated by the UE by sending a registration request to the AMF network element, and will not be described in detail herein.

According to the authentication method of an embodiment of the present disclosure, the UDM network element receives the network authentication procedure trigger indication from the AUSF network element, and sends the authentication notification message to the AMF network element in respond to the network authentication procedure trigger indication, thus realizing a mechanism to enable the network to trigger the network authentication procedure for the UE, capable of greatly improving continuity and security of a network service.

In some embodiments, the authentication notification message sent by the UDM network element to the AMF network element may further include access type information. The access type information indicates an access type applicable for the network authentication procedure initiated, and the access types includes 3rd generation partnership project (3GPP) access and/or non-3GPP access.

For example, if the access type information in the authentication notification message received by the AMF network element indicates the 3GPP access, the AMF network element may confirm that the initiated network authentication procedure is only for the 3GPP access.

For another example, if the access type information in the authentication notification message received by the AMF network element indicates the non-3GPP access, the AMF network element may confirm that the initiated network authentication procedure is only for the non-3GPP access.

For another example, if the access type information in the authentication notification message received by the AMF network element indicates the 3GPP access and the non-3GPP access, the AMF network element may confirm that the initiated network authentication procedure is for both the 3GPP access and the non-3GPP access.

In some embodiments, the network authentication procedure trigger indication and the authentication notification message may further include an authentication cause for which the AUSF network element requests to trigger the network authentication procedure, and the authentication cause includes at least one of: a steering of roaming counter reaching an upper limit; and a UE parameter update counter reaching an upper limit.

The AUSF network element may request the UDM network element to trigger the network authentication procedure due to invalid K_{AUSF}. The invalid K_{AUSF} may be caused by the steering of roaming counter reaching the upper limit, and/or the UE parameter update counter reaching the upper limit. Therefore, the cause why the AUSF network element requests the UDM network element to trigger the network authentication procedure may be that the steering of roaming counter reaches the upper limit, and/or the UE parameter update counter reaches the upper limit. The network authentication procedure trigger indication sent by the AUSF network element to the UDM network element can carry an authentication cause indicating the cause. After receiving the network authentication procedure trigger indication carrying the authentication cause, the UDM network element may send the authentication notification message carrying the authentication cause to the AMF network element.

In some embodiments, the authentication notification message sent by the UDM network element to the AMF network element may further include a confirmation request indication for requesting an authentication notification acknowledgement message from the AMF network element. The authentication notification acknowledgement message indicates that the AMF network element has requested the UE to perform the network authentication procedure.

The authentication notification message sent by the UDM network element to the AMF network element may further include the confirmation request indication, which is configured to request from the AMF network element the authentication notification acknowledgement message indicating that the AMF network element has requested the UE to perform the network authentication procedure. After receiving the authentication notification acknowledgement message, the UDM network element can confirm that the AMF network element has requested the UE to perform the network authentication procedure, that is, the UDM network element can understand whether this triggering of the network authentication procedure for the UE has been implemented.

For example, if the authentication notification message includes the confirmation request indication, and the UDM network element receives the authentication notification acknowledgement message sent by the AMF network element within a preset time period after sending the authentication notification message, the UDM network element may confirm that this triggering of the network authentication procedure for the UE fails to be implemented.

FIG. 2 is a flowchart illustrating an authentication method according to an embodiment of the present disclosure. As illustrated in FIG. 2, the method may be performed by an AUSF network element and may include following steps.

At step S201, a network authentication procedure trigger indication is sent to a UDM network element.

The network authentication procedure trigger indication includes an identifier of a user equipment (UE) corresponding to the AUSF network element, and the network authentication procedure trigger indication indicates the UDM network element to trigger a network authentication procedure for the UE.

The identifier of the UE may be a GPSI or an SUPI.

In this embodiment, the AUSF network element may send the network authentication procedure trigger indication to the UDM network element, and the UDM network element may send the authentication notification message to the AMF network element in response to the network authentication procedure trigger indication, thus achieving a mechanism to enable the network to trigger the network authentication procedure for the UE.

For example, in a case that the AUSF network element determines that the AUSF network element key K_{AUSF} needs to be regenerated, such as the current K_{AUSF} is invalid, the AUSF network element may send to the UDM network element the network authentication procedure trigger indication with the identifier of the UE corresponding to the AUSF network element carried therein.

According to the authentication method of an embodiment of the present disclosure, the AUSF network element sends the network authentication procedure trigger indication to the UDM network element, and the UDM network element may send the authentication notification message to the AMF network element in response to the network authentication procedure trigger indication, which may realize a mechanism to enable the network to trigger the network authentication procedure for the UE, and greatly improve continuity and security of a network service.

In some embodiments, the network authentication procedure trigger indication sent by the AUSF network element to the UDM network element may further include an authentication cause for which the AUSF network element requests to trigger the network authentication procedure, and the authentication cause includes at least one of: a steering of roaming counter reaching an upper limit; and a UE parameter update counter reaching an upper limit.

The AUSF network element may request the UDM network element to trigger the network authentication procedure due to invalid K_{AUSF}. The invalid K_{AUSF} may be caused by the steering of roaming counter reaching the upper limit, and/or the UE parameter update counter reaching the upper limit. Therefore, the cause why the AUSF network element requests the UDM network element to trigger the network authentication procedure may be that the steering of roaming counter reaches the upper limit, and/or the UE parameter update counter reaches the upper limit. The network authentication procedure trigger indication sent by the AUSF network element to the UDM network element can carry an authentication cause indicating the cause.

FIG. 3 is a flowchart illustrating an authentication method according to an embodiment of the present disclosure. The method may be performed by an AUSF network element. On the basic of the embodiment show in FIG. 2, as illustrated in FIG. 3, the authentication method may include following steps.

At step S301, a network authentication procedure trigger indication is sent to a UDM network element.

The network authentication procedure trigger indication includes an identifier of a user equipment (UE) corresponding to the AUSF network element, and the network authentication procedure trigger indication indicates the UDM network element to trigger a network authentication procedure for the UE.

The description and specific details of the above step S301 may refer to the relevant description and details of the above step S201.

At step S302, after confirming that the network authentication procedure is completed, a new AUSF network element key is generated, and values of the steering of roaming counter and the UE parameter update counter are reset.

After confirming that the network authentication procedure is completed, the AUSF network element may generate the new AUSF network element key K_{AUSF} and reset the steering of roaming counter and the UE parameter update counter, that is, Counter_{SoR} is set to 0x00 0x01 and Counter_{UPU} is set to 0x00 0x01.

According to the authentication method of an embodiment of the present disclosure, the AUSF network element sends the network authentication procedure trigger indication to the UDM network element, and the UDM network element may send the authentication notification message to the AMF network element in response to the network authentication procedure trigger indication. After the network authentication procedure is completed, the new AUSF network element key may be generated, and the steering of roaming counter and the UE parameter update counter are reset. Thus, the method may realize a mechanism to enable the network to trigger the network authentication procedure for the UE, and greatly improve continuity and security of a network service.

In some embodiments, the network authentication procedure trigger indication sent by the AUSF network element to the UDM network element may further include an authentication cause for which the AUSF network element requests to trigger the network authentication procedure, and the authentication cause includes at least one of: a steering of roaming counter reaching an upper limit; and a UE parameter update counter reaching an upper limit.

The present disclosure further provides an authentication method, performed by an AMF network element. The method includes: receiving an authentication notification message from a UDM network element, in which, the authentication notification message includes an identity of a user equipment (UE), and the authentication notification message notifies the AMF network element to perform a network authentication procedure for the UE; sending an authentication request to the UE via an non access stratum (NAS) connection between the AMF network element and the UE, in which, the authentication request requests the UE to perform the network authentication procedure; and receiving an authentication response from the UE, in which, the authentication response includes information required to perform the network authentication procedure.

In some embodiments, the method further includes: sending a paging message to the UE to create the NAS connection.

In some embodiments, the authentication notification message further includes a confirmation request indication for requesting an authentication notification acknowledgement message from the AMF network element, and the method further includes: sending the authentication notification acknowledgement message to the UDM network element, in which, the authentication notification acknowledgement message indicates that the AMF network element has requested the UE to perform the network authentication procedure.

In some embodiments, the method further includes: performing security protection on the authentication request based on an NAS security context locally stored.

In some embodiments, the method further includes: updating the NAS security context locally stored after the network authentication procedure is completed.

In some embodiments, the authentication request and the authentication notification message further include access type information, and the access type information indicates an access type applicable for the network authentication procedure initiated, the access types includes 3GPP access and/or non-3GPP access.

In some embodiments, the authentication notification message further includes an authentication cause for which the UDM network element sends the authentication notification message, and the authentication cause includes at least one of: a steering of roaming counter reaching an upper limit; and a UE parameter update counter reaching an upper limit.

FIG. 4 is a flowchart illustrating an authentication method according to an embodiment of the present disclosure. As illustrated in FIG. 4, the method may be performed by an AMF network element and may include following steps.

At step S401, an authentication notification message is received from a UDM network element.

The authentication notification message includes an identity of a UE, and the authentication notification message notifies the AMF network element to perform a network authentication procedure for the UE.

In this embodiment, the AMF network element may receive the authentication notification message carrying the identifier of the UE from the UDM network element, such that the UDM network element triggers the network authentication procedure for the UE.

The identifier of the UE may be a GPSI or an SUPI.

At step S402, an authentication request is sent to the UE via an NAS connection between the AMF network element and the UE.

The authentication request requests the UE to perform the network authentication procedure.

After receiving the authentication notification message, the AMF network element, may send the authentication request to the UE via the NAS connection between the AMF network element and the UE, and request the UE to perform the network authentication procedure.

At step S403, an authentication response from the UE is received.

The authentication response includes information required to perform the network authentication procedure.

After receiving the authentication request from the AMF network element, the UE may feed back the authentication response to the AMF network element to provide the AMF network element with the information required to perform the network authentication procedure.

Network devices involved in the network authentication procedure, such as the AMF network element, the AUSF network element, and the UDM network element, may interact with each other such that the network devices involved may obtain the information required to perform the network authentication procedure, and the network authentication procedure for the UE can be performed.

For specific implementation of the network authentication procedure for the UE, reference may be made to the network authentication procedure in the related art. For example, the specific implementation of the network authentication procedure shown in the present disclosure is similar to the implementation of the network authentication procedure initiated by the UE by sending a registration request to the AMF network element, and will not be described in detail here.

According to the authentication method of the embodiment of the present disclosure, the AMF network element may receive the authentication notification message from the UDM network element, send the authentication request to the UE and obtain the authentication response including the information required to perform the network authentication procedure from the UE, so as to trigger the network authentication procedure for the UE. Thus, the method may realize a mechanism to enable the network to trigger the network authentication procedure for the UE, and greatly improve continuity and security of a network service.

In some embodiments, the authentication notification message received from the UDM network element further includes an authentication cause for which the UDM network element sends the authentication notification message, and the authentication cause includes at least one of: a steering of roaming counter reaching an upper limit; and a UE parameter update counter reaching an upper limit.

The UDM network element may send the authentication notification message to the AMF network element in response to the network authentication procedure trigger indication received from the AUSF network element. When the AUSF network element determines that it is necessary to regenerate the AUSF network element key K_{AUSF}, such as when the current K_{AUSF} is invalid, the AUSF network element may send the network authentication procedure trigger indication to the UDM network element.

The invalid K_{AUSF} may be caused by the steering of roaming counter reaching the upper limit, and/or a UE parameter update counter reaching the upper limit. Therefore, the cause for which the UDM network element sends the authentication notification message to trigger the network authentication procedure for the UE may be the steering of roaming counter reaching the upper limit, and/or a UE parameter update counter reaching the upper limit.

In some embodiments, the authentication notification message received from the UDM network element and the authentication request sent to the UE may further include access type information, and the access type information indicates an access type applicable for the network authentication procedure initiated, the access types includes 3GPP access and/or non-3GPP access.

For example, if the access type information in the authentication notification message received by the AMF network element indicates 3GPP access, the AMF network element may confirm that the initiated network authentication procedure is only for 3GPP access, and the authentication request sent by the AMF network element to the UE carries the access type information, so that the UE can confirm that the network authentication procedure is only performed for 3GPP access.

For another example, if the access type information in the authentication notification message received by the AMF network element indicates non-3GPP access, the AMF network element can confirm that the initiated network authentication procedure is only for non-3GPP access, and the authentication request sent by the AMF network element to the UE carries the access type information, so that the UE can confirm that the network authentication procedure is only performed for non-3GPP access.

For another example, if the access type information in the authentication notification message received by the AMF network element indicates 3GPP access and non-3GPP access, the AMF network element can confirm that the initiated network authentication procedure is for both 3GPP access and non-3GPP access, the authentication request sent by the AMF network element to the UE carries the access type information, so that the UE can confirm that the network authentication procedure is performed for both 3GPP access and non-3GPP access.

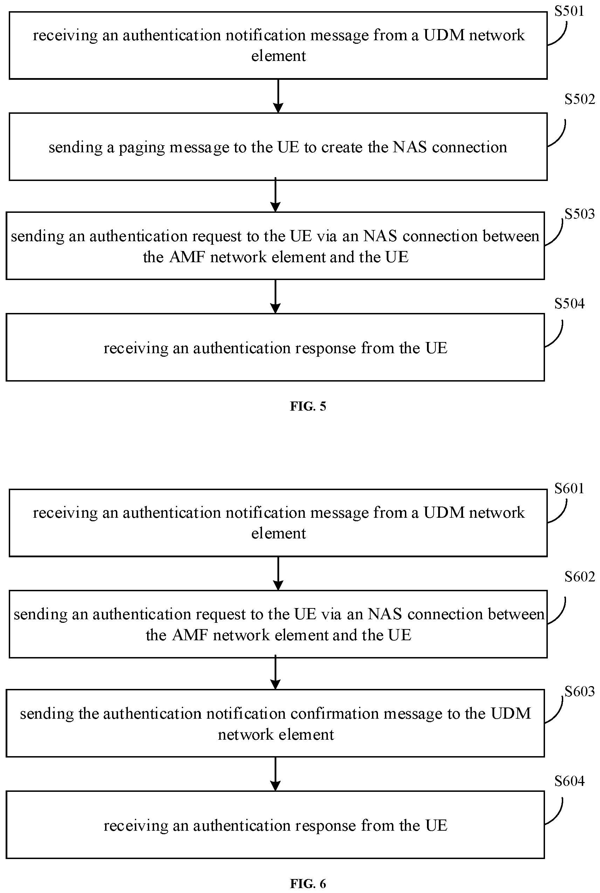

FIG. 5 is a flowchart illustrating an authentication method according to an embodiment of the present disclosure. The method may be performed by an AMF network element. On the basic of the embodiment of FIG. 4, as illustrated in FIG. 5, the method may include following steps.

At step S501, an authentication notification message is received from a UDM network element.

The authentication notification message includes an identity of a UE, and the authentication notification message notifies the AMF network element to perform a network authentication procedure for the UE.

For the description and specific details of the above step S501, please refer to the relevant description and details of the above step S401.

At step S502, a paging message is sent to the UE to create a NAS connection.

After the AMF network element receives an authentication communication message carrying an identifier of the UE, if it is found that there is no NAS connection between the UE and the AMF network element, a 5G core network may page the UE. If the UE is in a registered (RM-REGISTERED) and CM-IDLE state, the AMF may send a paging message to the UE via a 5G radio access network (NG-RAN) node to create the NAS connection with the UE. If the UE is in a CM-CONNECTED state, it indicates that the NAS connection between the UE and the AMF network element already exists, and this step S502 can be omitted.

At step S503, an authentication request is sent to the UE via the NAS connection between the AMF network element and the UE.

The authentication request requests the UE to perform the network authentication procedure.

At step S504, an authentication response from the UE is received.

The authentication response includes information required to perform the network authentication procedure.

For the description and specific details of the above steps S503-S504, please refer to the relevant description and details of the above steps S402-S403.

According to the authentication method of the embodiment of the present disclosure, the AMF network element may receive the authentication notification message from the UDM network element, send the authentication request to the UE and obtain the authentication response including the information required to perform the network authentication procedure from the UE, so as to trigger the network authentication procedure for the UE. Thus, the method may realize a mechanism to enable the network to trigger the network authentication procedure for the UE, and greatly improve continuity and security of a network service.

In some embodiments, the authentication notification message received from the UDM network element further includes an authentication cause for which the UDM network element sends the authentication notification message, and the authentication cause includes at least one of: a steering of roaming counter reaching an upper limit; and a UE parameter update counter reaching an upper limit.

In some embodiments, the authentication notification message received from the UDM network element and the authentication request sent to the UE may further include access type information, and the access type information indicates an access type applicable for the network authentication procedure initiated, the access types includes 3GPP access and/or non-3GPP access.

FIG. 6 is a flowchart illustrating an authentication method according to an embodiment of the present disclosure. The method may be performed by an AMF network element. On the basic of the embodiment of FIG. 4, as illustrated in FIG. 6, the method may include following steps.

At step S601, an authentication notification message is received from a UDM network element.

The authentication notification message includes an identity of a UE, and the authentication notification message notifies the AMF network element to perform a network authentication procedure for the UE.

At step S602, an authentication request is sent to the UE via an NAS connection between the AMF network element and the UE.

The authentication request requests the UE to perform the network authentication procedure.

For the description and specific details of the above steps S601-S602, please refer to the relevant description and details of the above steps S401-S402.

At step S602, an authentication notification acknowledgement message is sent to the UDM network element.

The authentication notification acknowledgement message indicates that the AMF network element has requested the UE to perform the network authentication procedure.

The authentication notification message received from the UDM network element may further include a confirmation request indication for requesting the authentication notification acknowledgement message from the AMF network element. If the authentication notification message includes a confirmation request indication, the AMF network element, after sending the authentication request to the UE, can send the authentication notification acknowledgement message to the UDM network element to notify the UDM network element that the network authentication procedure for the UE has been triggered. If the AMF network element fails to send the authentication request to the UE, it will not send the authentication notification acknowledgement message to the UDM network element. If the UDM network element fails to receive the authentication notification acknowledgement message within a preset time period, it can confirm that this triggering of the network authentication procedure for the UE fails to be implemented.

S604, the authentication response from the UE is received.

The authentication response includes information required to perform the network authentication procedure.

For the description and specific details of the above step S604, please refer to the relevant description and details of the above step S403.

According to the authentication method of the embodiment of the present disclosure, the AMF network element may receive the authentication notification message from the UDM network element, send the authentication request to the UE and obtain the authentication response including the information required to perform the network authentication procedure from the UE, so as to trigger the network authentication procedure for the UE. Thus, the method may realize a mechanism to enable the network to trigger the network authentication procedure for the UE, and greatly improve continuity and security of a network service.

It should be noted that although the embodiment shown in FIG. 6 is only described based on the embodiment shown in FIG. 4, similarly, the embodiment shown in FIG. 6 can also be based on the embodiment shown in FIG. 5, for example, step S603 of FIG. 6 can also be combined with steps S501-S504 of FIG. 5, which will not be described in detail here.

In some embodiments, the authentication notification message received from the UDM network element further includes an authentication cause for which the UDM network element sends the authentication notification message, and the authentication cause includes at least one of: a steering of roaming counter reaching an upper limit; and a UE parameter update counter reaching an upper limit.

In some embodiments, the authentication notification message received from the UDM network element and the authentication request sent to the UE may further include access type information, and the access type information indicates an access type applicable for the network authentication procedure initiated, the access types includes 3GPP access and/or non-3GPP access.

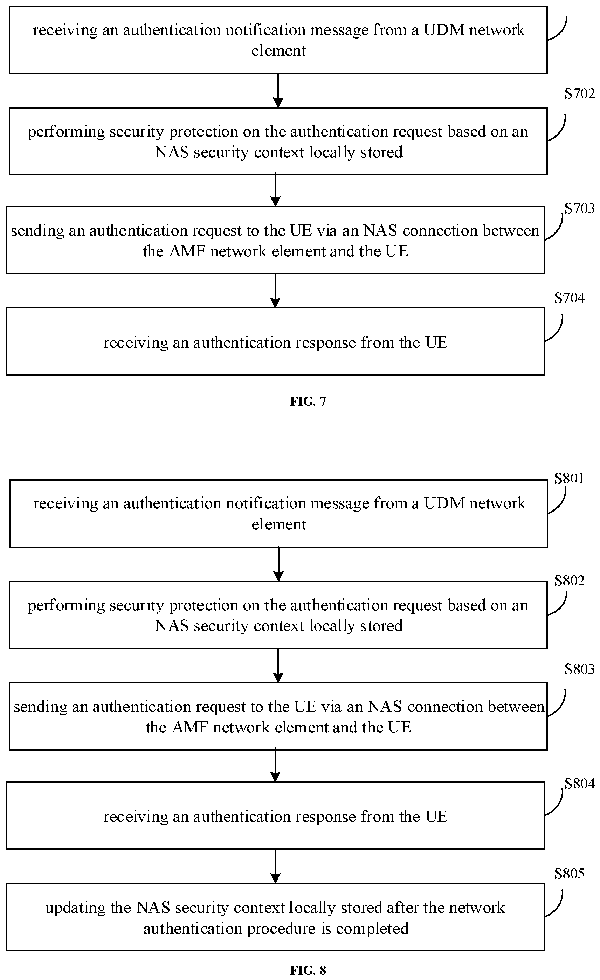

FIG. 7 is a flowchart illustrating an authentication method according to an embodiment of the present disclosure. The method may be performed by an AMF network element. On the basic of the embodiment of FIG. 4, as illustrated in FIG. 7, the method may include following steps.

At step S701, an authentication notification message is received from a UDM network element.

The authentication notification message includes an identity of a UE, and the authentication notification message notifies the AMF network element to perform a network authentication procedure for the UE.

For the description and specific details of the above step S701, please refer to the relevant description and details of the above step S401.

At step S702, security protection is performed on the authentication request based on an NAS security context locally stored.

After receiving the authentication notification message, the AMF network element may send the authentication request to the UE via the NAS connection between the AMF network element and the UE to request the UE to perform the network authentication procedure.

For security, the AMF network element may perform the security protection on the authentication request based on the locally stored NAS security context, for example, encrypt it, and then send an authentication request after performing the security protection to the UE. After receiving the authentication request after performing the security protection, the UE may parse the authentication request after performing the security protection according to the NAS security context stored locally in the UE to obtain the content of the authentication request.

At step S703, the authentication request after performing the security protection is sent to the UE via the NAS connection between the AMF network element and the UE.

The authentication request requests the UE to perform the network authentication procedure.

At step S704, an authentication response from the UE is received.

The authentication response includes information required to perform the network authentication procedure.

For the description and specific details of the above steps S703-S704, please refer to the relevant description and details of the above steps S402-S403.

According to the authentication method of the embodiment of the present disclosure, the AMF network element may receive the authentication notification message from the UDM network element, send the authentication request to the UE and obtain the authentication response including the information required to perform the network authentication procedure from the UE, so as to trigger the network authentication procedure for the UE. Thus, the method may realize a mechanism to enable the network to trigger the network authentication procedure for the UE, and greatly improve continuity and security of a network service.

It should be noted that although the embodiment shown in FIG. 7 is only described based on the embodiment shown in FIG. 4, similarly, the embodiment shown in FIG. 7 can also be based on the embodiment shown in FIG. 5 and FIG. 6, for example, step S702 in FIG. 7 can also be combined with steps S501-S504 in FIG. 5 and steps S601-S604 in FIG. 6, which will not be described in detail here.

In some embodiments, the authentication notification message received from the UDM network element further includes an authentication cause for which the UDM network element sends the authentication notification message, and the authentication cause includes at least one of: a steering of roaming counter reaching an upper limit; and a UE parameter update counter reaching an upper limit.

In some embodiments, the authentication notification message received from the UDM network element and the authentication request sent to the UE may further include access type information, and the access type information indicates an access type applicable for the network authentication procedure initiated, the access types includes 3GPP access and/or non-3GPP access.

FIG. 8 is a flowchart illustrating an authentication method according to an embodiment of the present disclosure. The method may be performed by an AMF network element. On the basic of the embodiment of FIG. 7, as illustrated in FIG. 8, the method may include following steps.

At step S801, an authentication notification message is received from a UDM network element.

The authentication notification message includes an identity of a UE, and the authentication notification message notifies the AMF network element to perform a network authentication procedure for the UE.

At step S802, security protection is performed on the authentication request based on an NAS security context locally stored.

At step S803, the authentication request after performing the security protection is sent to the UE via the NAS connection between the AMF network element and the UE.

The authentication request requests the UE to perform the network authentication procedure.

At step S804, an authentication response from the UE is received.

The authentication response includes information required to perform the network authentication procedure.

For the description and specific details of the above steps S801-S704, please refer to the relevant description and details of the above steps S701-S704.

At step S805, the NAS security context locally stored is updated after the network authentication procedure is completed.

After the AMF network element confirms that the network authentication procedure is completed, the AMF network element may update the locally stored NAS security context, such that after completing an NAS security model command procedure to activate the updated NAS security context, it can perform security protection on a specified message using the updated NAS security context.

According to the authentication method of the embodiment of the present disclosure, the AMF network element may receive the authentication notification message from the UDM network element, send the authentication request to the UE and obtain the authentication response including the information required to perform the network authentication procedure from the UE, so as to trigger the network authentication procedure for the UE. Thus, the method may realize a mechanism to enable the network to trigger the network authentication procedure for the UE, and greatly improve continuity and security of a network service.

It should be noted that although the embodiment shown in FIG. 7 is only described based on the embodiment shown in FIG. 4, similarly, the embodiment shown in FIG. 7 can also be based on the embodiment shown in FIG. 5 and FIG. 6, for example, step S702 in FIG. 7 can also be combined with steps S501-S504 in FIG. 5 and steps S601-S604 in FIG. 6, which will not be described in detail here.

In some embodiments, the authentication notification message received from the UDM network element further includes an authentication cause for which the UDM network element sends the authentication notification message, and the authentication cause includes at least one of: a steering of roaming counter reaching an upper limit; and a UE parameter update counter reaching an upper limit.

In some embodiments, the authentication notification message received from the UDM network element and the authentication request sent to the UE may further include access type information, and the access type information indicates an access type applicable for the network authentication procedure initiated, the access types includes 3GPP access and/or non-3GPP access.

Embodiments of the present disclosure provide an authentication method, performed by a UE. The method includes: receiving an authentication request from an AMF network element, in which, the authentication request requests the UE to perform the network authentication procedure; and feeding back an authentication response to the AMF network element, in which, the authentication response includes information required to perform the network authentication procedure.

In some embodiments, the method further includes: receiving a paging message from the AMF network element to create an NAS connection with the AMF network element.

In some embodiments, the method further includes: performing security protection on the authentication response based on an NAS security context locally stored.

In some embodiments, the method further includes: updating the NAS security context locally stored after the network authentication procedure is completed.

In some embodiments, the authentication request includes access type information, the access type information indicates an access type applicable for the network authentication procedure initiated, the access type includes 3GPP access and/or non-3GPP access.

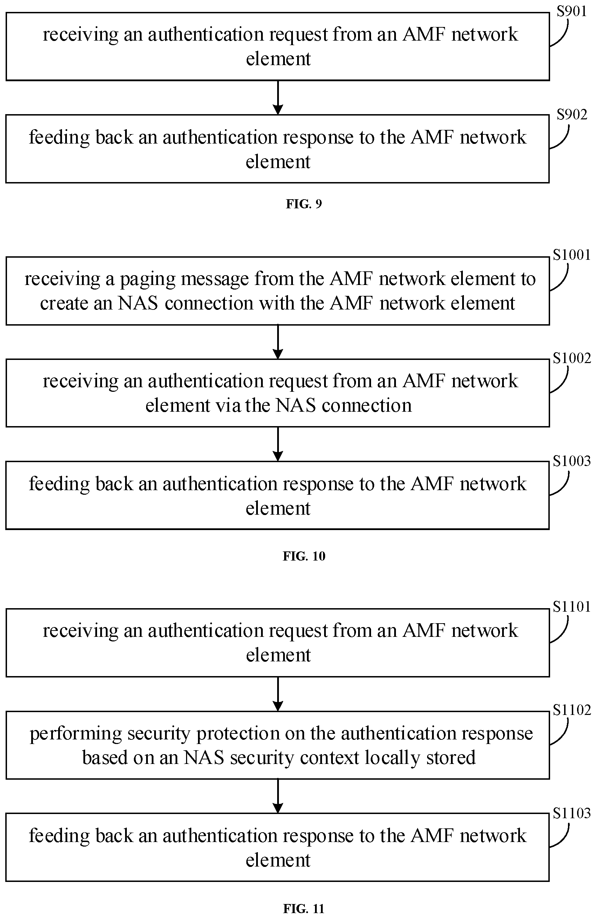

FIG. 9 is a flowchart illustrating an authentication method according to an embodiment of the present disclosure. As illustrated in FIG. 9, the method may be performed by a UE and may include following steps.

At step S901, an authentication request is received from the AMF network element.

The authentication request is used to request the UE to perform a network authentication procedure.

In this embodiment, the UE may receive the authentication request from the AMF network element to request the UE to perform the network authentication procedure.

For example, the AMF network element may send the authentication request to the UE after receiving the authentication notification message from the AUSF network element for notifying the AMF network element to perform the network authentication procedure for the UE.

S902: the authentication response is fed back to the AMF network element.

The authentication response includes information required to perform the network authentication procedure.

After receiving the authentication request from the AMF network element, the UE may feed back the authentication response to the AMF network element to provide the AMF network element with the information required to perform the network authentication procedure.

Network devices involved in the network authentication procedure, such as the AMF network element, the AUSF network element, and the UDM network element, may interact with each other such that the network devices involved may obtain the information required to perform the network authentication procedure, and the network authentication procedure for the UE can be performed.

For specific implementation of the network authentication procedure for the UE, reference may be made to the network authentication procedure in the related art. For example, the specific implementation of the network authentication procedure shown in the present disclosure is similar to the implementation of the network authentication procedure initiated by the UE by sending a registration request to the AMF network element, and will not be described in detail here.

According to the authentication method of an embodiment of the present disclosure, the UE may receive the authentication request from the AMF network element and feed back the authentication response including the information required to perform the network authentication procedure to the AMF network element, so as to trigger the network authentication procedure for the UE. Thus, the method may realize a mechanism to enable the network to trigger the network authentication procedure for the UE, and greatly improve continuity and security of a network service.

In some embodiments, the authentication request received from the AMF network element includes access type information, the access type information indicates an access type applicable for the network authentication procedure initiated, the access type includes 3GPP access and/or non-3GPP access.

For example, if the access type information in the authentication request received by the UE indicates 3GPP access, the UE can confirm that the network authentication procedure is only performed for 3GPP access.

For another example, if the access type information in the authentication request received by the UE indicates non-3GPP access, the UE can confirm that the network authentication procedure is only performed for non-3GPP access.

For another example, if the access type information in the authentication request received by the UE indicates 3GPP access and non-3GPP access, the UE can confirm that the network authentication procedure is performed for both 3GPP access and non-3GPP access.

FIG. 10 is a flowchart illustrating an authentication method according to an embodiment of the present disclosure. The method may be performed by a UE. On the basic of the embodiment of FIG. 9, as illustrated in FIG. 10, the method may include following steps.

At step S1001: a paging message is received from the AMF network element to create an NAS connection with the AMF network element.

The AMF network element can exchange information with the UE via the NAS connection. If there is no NAS connection between the UE and the AMF network element, a 5G core network may page the UE. If the UE is in a registered (RM-REGISTERED) and CM-IDLE state, the AMF may send a paging message to the UE via a 5G radio access network (NG-RAN) node to create the NAS connection with the UE. If the UE is in a CM-CONNECTED state, it indicates that the NAS connection between the UE and the AMF network element already exists, and this step S1001 can be omitted.

At step S1002, an authentication request is received from the AMF network element.

The authentication request is used to request the UE to perform a network authentication procedure.

S1003: the authentication response is fed back to the AMF network element.

The authentication response includes information required to perform the network authentication procedure.

For the description and specific details of the above steps S1002-S1003, please refer to the relevant description and details of the above steps S901-S902.

According to the authentication method of an embodiment of the present disclosure, the UE may receive the authentication request from the AMF network element and feed back the authentication response including the information required to perform the network authentication procedure to the AMF network element, so as to trigger the network authentication procedure for the UE. Thus, the method may realize a mechanism to enable the network to trigger the network authentication procedure for the UE, and greatly improve continuity and security of a network service.

In some embodiments, the authentication request received from the AMF network element includes access type information, the access type information indicates an access type applicable for the network authentication procedure initiated, the access type includes 3GPP access and/or non-3GPP access.

FIG. 11 is a flowchart illustrating an authentication method according to an embodiment of the present disclosure. The method may be performed by a UE. On the basic of the embodiment of FIG. 9, as illustrated in FIG. 11, the method may include following steps.

At step S1101, an authentication request is received from the AMF network element.

The authentication request is used to request the UE to perform a network authentication procedure.

For the description and specific details of the above step S1101, please refer to the relevant description and details of the above step S901.

At step S1102, security protection is performed on the authentication response based on an NAS security context locally stored.

After receiving the authentication request, the UE can send the authentication response to the AMF network element via the NAS connection between the AMF network element and the UE to provide the information required to perform the network authentication procedure.

For security reasons, the UE may perform the security protection the authentication response based on the locally stored NAS security context, for example, encrypt it, and then send an authentication response after performing the security protection to the AMF network element. After receiving the authentication response after performing the security protection, the AMF network element may parse the authentication response after performing the security protection according to the NAS security context stored locally on the AMF network element to obtain the content of the authentication response.

At step S1103: the authentication response is fed back to the AMF network element.

The authentication response includes information required to perform the network authentication procedure.

For the description and specific details of the above step S1103, please refer to the relevant description and details of the above step S902.

According to the authentication method of an embodiment of the present disclosure, the UE may receive the authentication request from the AMF network element and feed back the authentication response including the information required to perform the network authentication procedure to the AMF network element, so as to trigger the network authentication procedure for the UE. Thus, the method may realize a mechanism to enable the network to trigger the network authentication procedure for the UE, and greatly improve continuity and security of a network service.

It should be noted that although the embodiment shown in FIG. 11 is only described based on the embodiment shown in FIG. 9, similarly, the embodiment shown in FIG. 11 may also be based on the embodiment shown in FIG. 10, for example, step S1102 in FIG. 11 can also be combined with steps S1001-S1003 in FIG. 10, which will not be described in detail here.

In some embodiments, the authentication request received from the AMF network element includes access type information, the access type information indicates an access type applicable for the network authentication procedure initiated, the access type includes 3GPP access and/or non-3GPP access.

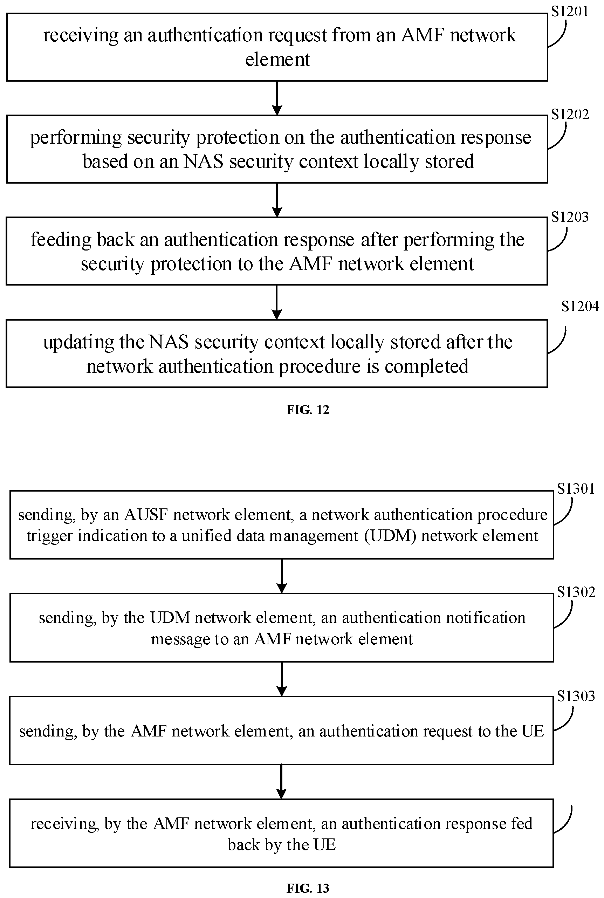

FIG. 12 is a flowchart illustrating an authentication method according to an embodiment of the present disclosure. The method may be performed by a UE. On the basic of the embodiment of FIG. 9, as illustrated in FIG. 12, the method may include following steps.

At step S1201, an authentication request is received from the AMF network element.

The authentication request is used to request the UE to perform a network authentication procedure.

At step S1202, security protection is performed on the authentication response based on an NAS security context locally stored.

At step S1203: the authentication response is fed back to the AMF network element.

The authentication response includes information required to perform the network authentication procedure.

For the description and specific details of the above steps S1201-S1203, please refer to the relevant description and details of the above steps S1101-S1103.

At step S1204, the NAS security context locally stored is updated after the network authentication procedure is completed.

After the UE confirms that the network authentication procedure is completed, the UE may update the locally stored NAS security context, such that after completing an NAS security model command procedure to activate the updated NAS security context, it can perform security protection on a specified message using the updated NAS security context.

According to the authentication method of an embodiment of the present disclosure, the UE may receive the authentication request from the AMF network element and feed back the authentication response including the information required to perform the network authentication procedure to the AMF network element, so as to trigger the network authentication procedure for the UE. Thus, the method may realize a mechanism to enable the network to trigger the network authentication procedure for the UE, and greatly improve continuity and security of a network service.

In some embodiments, the authentication request received from the AMF network element includes access type information, the access type information indicates an access type applicable for the network authentication procedure initiated, the access type includes 3GPP access and/or non-3GPP access.

FIG. 13 is a flowchart illustrating an authentication method according to an embodiment of the present disclosure. This method may be performed by interaction between a UE, an AMF network element, an AUSF network element and a UDM network element. As illustrated in FIG. 13, the method may include following steps.

At step S1301, the AUSF network element sends a network authentication procedure trigger indication to the UDM network element.

The network authentication procedure trigger indication comprises an identifier of the UE corresponding to the AUSF network element, and the network authentication procedure trigger indication indicates the UDM network element to trigger a network authentication procedure for the UE.

The identity of the UE may be a generic public subscription identifier (GPSI) or a subscription permanent identifier (SUPI).

For example, in a case that the AUSF network element determines that the AUSF network element key K_{AUSF} needs to be regenerated, such as the current K_{AUSF} is invalid, the AUSF network element may send to the UDM network element the network authentication procedure trigger indication with the identifier of the UE corresponding to the AUSF network element carried therein.

At step S1302, the UDM network element sends an authentication notification message to the AMF network element.

The authentication notification message comprises the identity of the UE and notifies the AMF network element to perform the network authentication procedure for the UE.

After receiving the network authentication procedure trigger indication, the UDM network element may send the authentication notification message to the AMF network element in response to the network authentication procedure trigger indication, to notify the AMF network element to perform the network authentication procedure for the UE.

For a specific implementation of the network authentication procedure for the UE, reference may be made to a network authentication procedure in the related art. For example, the specific implementation of the network authentication procedure shown in the present disclosure is similar to an implementation of a network authentication procedure initiated by the UE by sending a registration request to the AMF network element, and will not be described in detail herein.

At step 1303, the AMF network element sends an authentication request to the UE.

The authentication request requests the UE to perform the network authentication procedure.

After receiving the authentication notification message, the AMF network element, may send the authentication request to the UE via the non access stratum (NAS) connection between the AMF network element and the UE, and request the UE to perform the network authentication procedure.

After the AMF network element receives an authentication communication message carrying an identifier of the UE, if it is found that there is no NAS connection between the UE and the AMF network element, a 5G core network may page the UE. If the UE is in a registered (RM-REGISTERED) and CM-IDLE state, the AMF may send a paging message to the UE via a 5G radio access network (NG-RAN) node to create the NAS connection with the UE. If the UE is in a CM-CONNECTED state, it indicates that the NAS connection between the UE and the AMF network element already exists. The AMF network element communicates with the UE via the NAS connection.

At step S1304, the AMF network element receives an authentication response from the UE.

The authentication response comprises information required to perform the network authentication procedure.

After receiving the authentication request from the AMF network element, the UE may feed back the authentication response to the AMF network element to provide the AMF network element with the information required to perform the network authentication procedure.

According to the authentication method of an embodiment of the present disclosure, the AUSF network element sends the network authentication procedure trigger indication to the UDM network element, and the UDM network element, in response to the network authentication procedure trigger indication, sends the authentication notification message to the AMF network element to notify the AMF network element to perform the network authentication procedure for the UE. The AMF network element sends the authentication request to the UE after receiving the authentication notification message from the AUSF network element and obtains the authentication response including the information required to perform the network authentication procedure from the UE, so as to trigger the network authentication procedure for the UE. Thus, the method may realize a mechanism to enable the network to trigger the network authentication procedure for the UE, and greatly improve continuity and security of a network service.

In some embodiments, the network authentication procedure trigger indication and the authentication notification message further include an authentication cause for which the AUSF network element requests to trigger the network authentication procedure, and the authentication cause includes at least one of: a steering of roaming counter reaching an upper limit; and a UE parameter update counter reaching an upper limit.

In a case that the AUSF network element determines that the AUSF network element key K_{AUSF} needs to be regenerated, such as the current K_{AUSF} is invalid, the AUSF network element may send the network authentication procedure trigger indication to the UDM network element.

The invalid K_{AUSF} may be caused by the steering of roaming counter reaching the upper limit, and/or a UE parameter update counter reaching the upper limit. Therefore, the cause for which the UDM network element sends the authentication notification message to trigger the network authentication procedure for the UE may be the steering of roaming counter reaching the upper limit, and/or a UE parameter update counter reaching the upper limit.

In some embodiments, the authentication notification message sent by the UDM network element and the authentication request sent by the AMF network element to the UE may further include access type information, and the access type information indicates an access type applicable for the network authentication procedure initiated, the access types includes 3GPP access and/or non-3GPP access.

For example, if the access type information in the authentication notification message received by the AMF network element indicates 3GPP access, the AMF network element may confirm that the initiated network authentication procedure is only for 3GPP access, and the authentication request sent by the AMF network element to the UE carries the access type information, so that the UE can confirm that the network authentication procedure is only performed for 3GPP access.

For another example, if the access type information in the authentication notification message received by the AMF network element indicates non-3GPP access, the AMF network element can confirm that the initiated network authentication procedure is only for non-3GPP access, and the authentication request sent by the AMF network element to the UE carries the access type information, so that the UE can confirm that the network authentication procedure is only performed for non-3GPP access.

For another example, if the access type information in the authentication notification message received by the AMF network element indicates 3GPP access and non-3GPP access, the AMF network element can confirm that the initiated network authentication procedure is for both 3GPP access and non-3GPP access, the authentication request sent by the AMF network element to the UE carries the access type information, so that the UE can confirm that the network authentication procedure is performed for both 3GPP access and non-3GPP access.

In some embodiments, the authentication notification message includes a confirmation request indication for requesting an authentication notification acknowledgement message from the AMF network element. The authentication method may further include the AMF network element sending the authentication notification acknowledgement message to the UDM network element, in which the authentication notification acknowledgement message indicates that the AMF network element has requested the UE to perform the network authentication procedure.

The authentication notification message sent by the UDM network element may further include the confirmation request indication for requesting the authentication notification acknowledgement message from the AMF network element. If the authentication notification message includes a confirmation request indication, the AMF network element, after sending the authentication request to the UE, may send the authentication notification acknowledgement message to the UDM network element to notify the UDM network element that the network authentication procedure for the UE has been triggered. If the AMF network element fails to send the authentication request to the UE, it will not send the authentication notification acknowledgement message to the UDM network element. If the UDM network element fails to receive the authentication notification acknowledgement message within a preset time period, it can confirm that this triggering of the network authentication procedure for the UE fails to be implemented.

In some embodiments, the authentication method may further include that, after confirming that the network authentication procedure is completed, the AUSF network element generates a new AUSF network element key, and resets the steering of roaming counter and the UE parameter update counter.

After confirming that the network authentication procedure is completed, the AUSF network element may generate the new AUSF network element key K_{AUSF} and reset the steering of roaming counter and the UE parameter update counter, that is, Counter_{SoR} is set to 0x00 0x01 and Counter_{UPU} is set to 0x00 0x01.

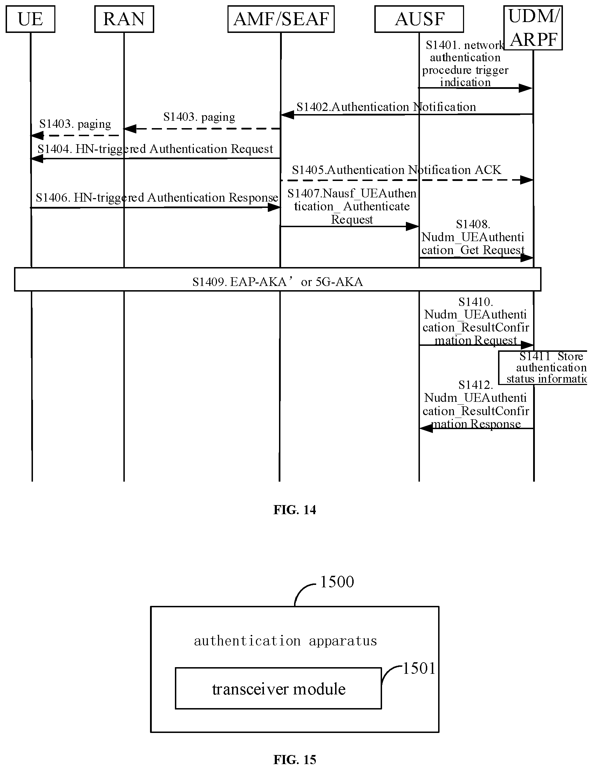

FIG. 14 is a flowchart illustrating an authentication method according to an embodiment of the present disclosure. This method may be performed by interaction between a UE, an AMF network element, an AUSF network element and a UDM network element. As illustrated in FIG. 14, the method may include following steps.

At step S1401, the AUSF network element sends a network authentication procedure trigger indication to the UDM network element. The network authentication procedure trigger indication may be Nausf_SoRProtection Response and/or Nasuf_UPUPtrotection Response. TheNausf_SoRProtection Response can indicate that Counter_{SoR} related to K_{AUSF} has reached an upper limit, and Nasuf_UPUPtrotection Response can indicate that Counter_{UPU} related to K_{AUSF} has reached an upper limit.

At step S1402, the UDM network element sends an authentication notification message (for example, Nausf_UECM_AuthenticationNotification) to the AMF network element. The authentication notification message may include an SUPI, an access type, an authentication cause, etc. The authentication cause can be that the Counter_{SoR} reaches the upper limit and/or the Counter_{UPU} reaches the upper limit. The access type may indicate whether the authentication procedure applies to 3GPP access, non-3GPP access, or both.

At step S1403, considering that there may be no NAS connection between the UE and the AMF network element, a 5G core network may page the UE. If the UE is in a registered (RM-REGISTERED) and CM idle (CM-IDLE) state, that is, reachable via the 3GPP access, the AMF may send a paging message to the UE via a 5G radio access network (NG-RAN) node, to create an NAS connection with the UE. If the UE is in a CM-CONNECTED state, this step can be omitted.

At step S1404, once the NAS connection between the UE and the AMF network element has been set up, the AMF network element may send an authentication request HN-triggered Authentication Request to the UE. The request may include an access type, and the request may perform security protection via the NAS security context.

At step S1405, if the UDM network element has requested authentication notification acknowledgement from the AMF network element, the AMF network element sends the authentication notification acknowledgement message Authentication Notification ACK to the UDM network element.

At step S1406, the UE feeds back an authentication response HN-triggered Authentication Response to the AMF network element. The response may include information required to perform the network authentication procedure, such as capability information of the UE itself.

At step S1407, a security anchor function (SEAF) network element triggers an authentication service by sending an authentication request message Nausf_UEAuthentication _Authenticate Request to the AUSF network element. The message may include an SUCI or an SUPI, a service network name and other information.

At step S1408, the AUSF network element sends an authentication get request message Nudm_UEAuthentication_Get Request to the UDM network element. The message may include the SUPI, the service network name and other information. The UDM network element may select an authentication mode based on the SUPI.

At step S1409, an improved extensible authentication protocol-authentication and key agreement (EAP-AKA') or 5G-AKA procedure is performed based on the authentication mode selected by the UDM network element.

At step S1410, the AUSF network element generates and stores a new K_{AUSF}, and uses the authentication result confirmation request Nudm_UEAuthentication_ResultConfirmation Request to notify the UDM network element of a result and a time of the network authentication procedure. In addition, the AUSF network element resets the Counter_{SoR} and the Counter_{UPU}.

At step S1411, the UDM network element stores authentication status information of the UE, including the SUPI, an authentication result indicating authentication success or failure, a timestamp indicating a time when the network authentication procedure is performed, and a service network name, etc.

At step S1412, the UDM network element feeds back the authentication result confirmation response Nudm_UEAuthentication_ResultConfirmation Response to the AUSF network element to indicate that the authentication result confirmation request has been received.

In the above embodiments provided in the present disclosure, the methods provided in embodiments of the present disclosure are introduced from the perspectives of the network device and the user equipment respectively. In order to realize various functions in the methods provided by the above embodiments of the present disclosure, the network device and the user equipment may include a hardware structure, and a software module, to implement the above-mentioned functions in the form of the hardware structure, the software module, or the hardware structure plus the software module. A certain function of the above-mentioned functions may be implemented in the form of the hardware structure, the software module, or the hardware structure plus the software module.

Corresponding to the authentication methods provided by the above-mentioned embodiments, the present disclosure also provides an authentication apparatus. Since the authentication apparatus provided by embodiments of the present disclosure corresponds to the authentication method provided by the above-mentioned embodiments, the implementation of the authentication method is also applicable to the authentication apparatus provided in this embodiment, and will not be described in detail in this embodiment.

FIG. 15 is a block diagram illustrating an authentication apparatus 1500 according to an embodiment of the present disclosure. The apparatus is applied for a UDM network element.

As illustrated in FIG. 15, the authentication apparatus 1500 includes a transceiver module 1501.

The transceiver module 1501 is configured to: receive a network authentication procedure trigger indication from an authentication server function (AUSF) network element, in which, the network authentication procedure trigger indication includes an identifier of a user equipment (UE) corresponding to the AUSF network element, and the network authentication procedure trigger indication indicates the UDM network element to trigger a network authentication procedure for the UE; and send an authentication notification message to an access and mobility management function (AMF) network element, in which, the authentication notification message includes the identifier of the UE, and the authentication notification message notifies the AMF network element to perform the network authentication procedure for the UE.

According to the authentication apparatus of an embodiment of the present disclosure, the UDM network element receives the network authentication procedure trigger indication from the AUSF network element, and sends the authentication notification message to the AMF network element in respond to the network authentication procedure trigger indication, thus realizing a mechanism to enable the network to trigger the network authentication procedure for the UE, capable of greatly improving continuity and security of a network service.

In some embodiments, the authentication notification message further includes access type information, and the access type information indicates an access type applicable for the network authentication procedure initiated, the access type includes 3rd generation partnership project (3GPP) access and/or non-3GPP access.

In some embodiments, the network authentication procedure trigger indication and the authentication notification message further include an authentication cause for which the AUSF network element requests to trigger the network authentication procedure, and the authentication cause includes at least one of: a steering of roaming counter reaching an upper limit; and a UE parameter update counter reaching an upper limit.

In some embodiments, the authentication notification message further includes a confirmation request indication for requesting an authentication notification acknowledgement message from the AMF network element, and the authentication notification acknowledgement message indicates that the AMF network element has requested the UE to perform the network authentication procedure.

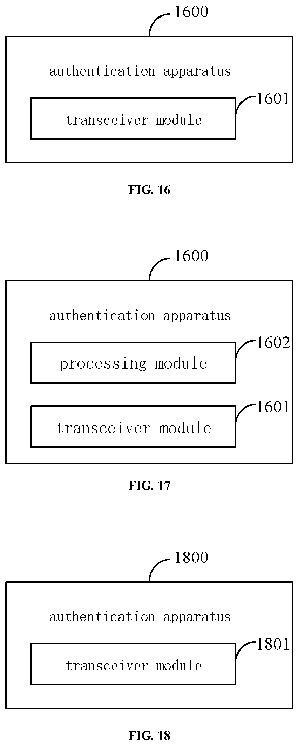

FIG. 16 is a block diagram illustrating an authentication apparatus 1600 according to an embodiment of the present disclosure. The apparatus is applied for an AUSF network element.

As illustrated in FIG. 16, the authentication apparatus 1600 includes a transceiver module 1601.

The transceiver module 1601 is configured to: send a network authentication procedure trigger indication to a unified data management (UDM) network element, wherein the network authentication procedure trigger indication comprises an identifier of a user equipment (UE) corresponding to the AUSF network element, and the network authentication procedure trigger indication indicates the UDM network element to trigger a network authentication procedure for the UE.

According to the authentication method of an embodiment of the present disclosure, the AUSF network element sends the network authentication procedure trigger indication to the UDM network element, and the UDM network element may send the authentication notification message to the AMF network element in response to the network authentication procedure trigger indication, which may realize a mechanism to enable the network to trigger the network authentication procedure for the UE, and greatly improve continuity and security of a network service.

In some embodiments, the network authentication procedure trigger indication further includes an authentication cause for which the AUSF network element requests to trigger the network authentication procedure, and the authentication cause includes at least one of: a steering of roaming counter reaching an upper limit; and a UE parameter update counter reaching an upper limit.

In some embodiments, as illustrated in FIG. 17, the authentication apparatus 1600 further includes a processing module 1602. The processing module 1602 is configured to, after confirming that the network authentication procedure is completed, generate a new AUSF network element key, and reset values of the steering of roaming counter and the UE parameter update counter.

FIG. 18 is a block diagram illustrating an authentication apparatus 1800 according to an embodiment of the present disclosure. The apparatus is applied for an AMF network element.

As illustrated in FIG. 18, the authentication apparatus 1800 includes a transceiver module 1801.

The transceiver module 1801 is configured to: receive an authentication notification message from a unified data management (UDM) network element, wherein the authentication notification message comprises an identity of a user equipment (UE), and the authentication notification message notifies the AMF network element to perform a network authentication procedure for the UE; send an authentication request to the UE via an NAS connection between the AMF network element and the UE, wherein the authentication request requests the UE to perform the network authentication procedure; and receive an authentication response from the UE, wherein the authentication response comprises information required to perform the network authentication procedure.

According to the authentication method of the embodiment of the present disclosure, the AMF network element may receive the authentication notification message from the UDM network element, send the authentication request to the UE and obtain the authentication response including the information required to perform the network authentication procedure from the UE, so as to trigger the network authentication procedure for the UE. Thus, the method may realize a mechanism to enable the network to trigger the network authentication procedure for the UE, and greatly improve continuity and security of a network service.

In some embodiments, the transceiver module 1801 is further configured to: send a paging message to the UE to create the NAS connection.

In some embodiments, the authentication notification message further includes a confirmation request indication for requesting an authentication notification acknowledgement message from the AMF network element, and the method further includes: sending the authentication notification acknowledgement message to the UDM network element, in which, the authentication notification acknowledgement message indicates that the AMF network element has requested the UE to perform the network authentication procedure.

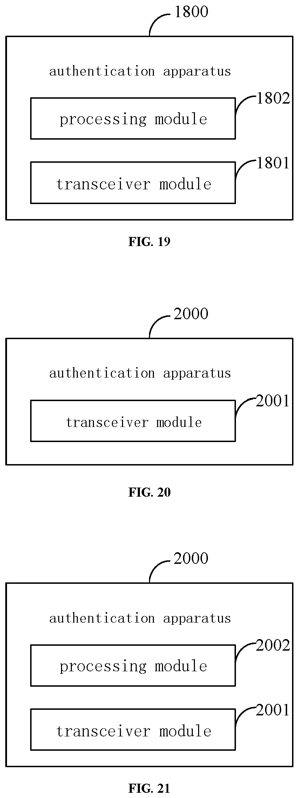

In some embodiments, as illustrated in FIG. 19, the authentication apparatus 1800 further includes a processing module 1802. The processing module 1802 is configured to, perform security protection on the authentication request based on an NAS security context locally stored.

In some embodiments, the processing module 1802 is further configured to: update the NAS security context locally stored after the network authentication procedure is completed.

In some embodiments, the authentication request and the authentication notification message further include access type information, and the access type information indicates an access type applicable for the network authentication procedure initiated, the access types includes 3GPP access and/or non-3GPP access.

In some embodiments, the authentication notification message further includes an authentication cause for which the AUSF network element requests to trigger the network authentication procedure, and the authentication cause includes at least one of: a steering of roaming counter reaching an upper limit; and a UE parameter update counter reaching an upper limit.

FIG. 20 is a block diagram illustrating an authentication apparatus 2000 according to an embodiment of the present disclosure. The apparatus is applied for a UE.

As illustrated in FIG. 20, the authentication apparatus 2000 includes a transceiver module 2001.

The transceiver module 2001 is configured to: receive an authentication request from an AMF network element, in which, the authentication request requests the UE to perform the network authentication procedure; and feed back an authentication response to the AMF network element, in which, the authentication response includes information required to perform the network authentication procedure.

According to the authentication method of an embodiment of the present disclosure, the UE may receive the authentication request from the AMF network element and feed back the authentication response including the information required to perform the network authentication procedure to the AMF network element, so as to trigger the network authentication procedure for the UE. Thus, the method may realize a mechanism to enable the network to trigger the network authentication procedure for the UE, and greatly improve continuity and security of a network service.

In some embodiments, the transceiver module 2001 is further configured to: receive a paging message from the AMF network element to create an NAS connection with the AMF network element.

In some embodiments, as illustrated in FIG. 21, the authentication apparatus 2000 further includes a processing module 2002. The processing module 2002 is configured to, perform security protection on the authentication response based on an NAS security context locally stored.

In some embodiments, the processing module 2002 is further configured to, update the NAS security context locally stored after the network authentication procedure is completed.

In some embodiments, the authentication request includes access type information, the access type information indicates an access type applicable for the network authentication procedure initiated, the access type includes 3GPP access and/or non-3GPP access.

An embodiment of the present disclosure also provides an authentication system, which includes the UDM network element described in an embodiment of FIG. 15, the AUSF network element described in the embodiment of FIGs. 16-17, and the AMF network described in the embodiment of FIGs. 18-19.

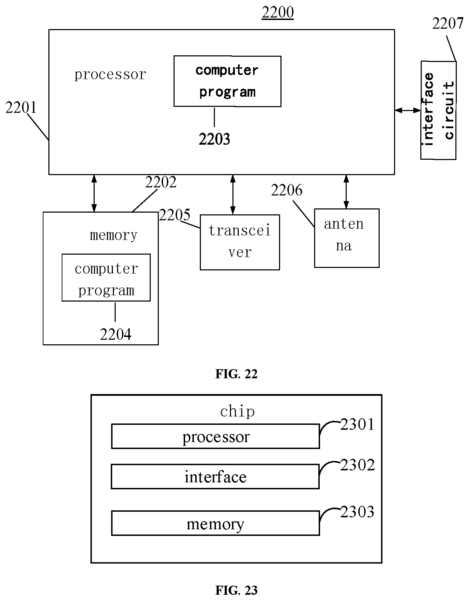

Referring to FIG. 22, FIG. 22 is a diagram illustrating a structure of another communication device 2200 according to embodiments of the present disclosure. The communication device 2200 may be a network device, a user equipment, or a chip, a system on chip or a processor that supports the network device to implement the method, or a chip, a system on chip or a processor that supports the terminal device to implement the method. The device may be configured to implement the method described in the method embodiments, and may refer to descriptions in the method embodiments.

The communication device 2200 may include one or more processors 2201. The processor 2201 may include a general purpose processor or a dedicated processor. For example, the processor 2201may be a baseband processor or a central processor. The baseband processor may be configured to process a communication protocol and communication data, and the central processor may be configured to control the communication device (e.g., a base station, a baseband chip, a terminal device, a terminal device chip, a DU or CU, etc.), to execute a computer program, and process data of the computer program.

Optionally, the communication device 2200 may further include one or more memories 2202 with a computer program 2204 stored thereon. The processor 2201 executes the computer program 2204 so that the communication device 2200 performs the method as described in the above method embodiments. Optionally, the memory 2202 may further store data. The communication device 2200 and the memory 2202 may be independently configured or integrated together.

Optionally, the communication device 2200 may further include a transceiver 2205 and an antenna 2206. The transceiver 2205 may be referred to as a transceiving unit, a transceiver or a transceiving circuit, which may be configured to achieve a transceving function. The transceiver 2205 may include a receiver and a transmitter. The receiver may be referred to as a receiver or a receiving circuit, etc., for implementing a receiving function; the transmitter may be referred to as a transmitter or a transmission circuit, etc. for implementing a transmission function.

Optionally, the communication device 2200 may further include one or more interface circuits 2207. The interface circuit 2207 is configured to receive code instructions and transmit the code instructions to the processor 2201. The processor 2201 runs the code instructions so that the communication device 2200 performs the method according to the above method embodiment.

In an implementation, the processor 2201 may include a transceiver configured to implement receiving and transmitting functions. For example, the transceiver may be a transceiving circuit, or an interface, or an interface circuit. The transceiving circuit, the interface or the interface circuit configured to implement receiving and transmitting functions may be separate or integrated together. The transceiving circuit, the interface or the interface circuit may be configured to read and write codes/data, or the transceiving circuit, the interface or the interface circuit may be configured to transmit or deliver a signal.

In an implementation, the processor 2201 may be stored with a computer program 2203. The computer program 2203 runs on the processor 141 so that the communication device 2200 performs the method as described in the above method embodiments. The computer program 2203 may be solidified in the processor 2201, in which case the processor 2201 may be implemented by hardware.

In an implementation, the communication device 2200 may include a circuit that may implement a transmitting or receiving or communication function in the above method embodiments. The processor and the transceiver described in the present disclosure may be implemented on integrated circuits (ICs), analog ICs, radio frequency integrated circuits (RFICs), mixed signal ICs, application specific integrated circuits (ASICs), printed circuit boards (PCBs), electronic devices, etc. The processor and the transceiver may further be fabricated by using various IC process technologies, such as complementary metal oxide semiconductor (CMOS), nMetal-oxide-semiconductor (NMOS), positive channel metal oxide semiconductor (PMOS), bipolar junction transistor(BJT), bipolar CMOS(BiCMOS), silicon germanium(SiGe) and gallium arsenide(GaAs).

The communication device described in the above embodiments may be a network device or a user equipment, but the scope of the communication device described in the present disclosure is not limited thereto, and a structure of the communication device may not be subject to FIG. 22. The communication device may be a stand-alone device or may be a part of a larger device. For example, the communication device may be:
(1) a stand-alone integrated circuit (IC), or a chip, or a system on chip or a subsystem;
(2) a set of one or more ICs, optionally, which may also include a storage component for storing data and a computer program;
(3) an ASIC, such as a Modem;
(4) a module that may be embedded within other devices;
(5) a receiver, a terminal device, a smart terminal device, a cellular phone, a wireless device, a handset, a mobile unit, a vehicle device, a network device, a cloud device, an artificial intelligence device, etc.; and
(6) others, and so forth.

In the case that the communication device may be a chip or a system on chip, please refer to a diagram of a structure of a chip as illustrated in FIG. 23. The chip illustrated in FIG. 23 may include a processor 2301 and an interface 2302. There may be one or more processors 2301, and there may be a plurality of interfaces 2302.

Optionally, the chip further includes a memory 1103. The memory 1103 is configured to save a necessary computer program and data.

Those skilled in the related art may understand that, various illustrative logical blocks and steps listed in embodiments of the present disclosure, may be implemented by an electronic hardware, a computer software or a combination of an electronic hardware and a computer software. Whether the function is implemented by the hardware or the software depends on specific applications and design requirements for an overall system. Those skilled in the art may implement the functions by using various methods for each specific application, but such an implementation should not be understood as beyond the protection scope of embodiments of the present disclosure.

A readable storage medium with instructions stored thereon is further provided in the disclosure. When the instructions are executed by a computer, steps in the any one method embodiment are implemented.

A computer program product is further provided in the disclosure. The computer program product implements functions of the above any one method embodiment when executed by a computer.

In the above embodiments, the functions may be wholly or partially implemented by a software, a hardware, a firmware, or any combination thereof. When implemented by a software, the functions may be implemented in whole or in part in the form of a computer program product. The computer program product includes one or more computer programs. Procedures or functions according to embodiments of the present disclosure are wholly or partially generated when the computer program is loaded and executed on a computer. The computer may be a general purpose computer, a special purpose computer, a computer network, or other programmable device. The computer program may be stored in a computer-readable storage medium or transmitted from one computer-readable storage medium to another. For example, the computer program may be transmitted from one website, computer, server, or data center to another via wire (such as a coaxial cable, a fiber optic, a digital subscriber line (DSL)) or wireless (such as infrared, wireless, microwave). The computer-readable storage medium may be any available medium that may be accessed by a computer or a data storage device such as a server that integrates one or more of the available media, and a data center. The readable medium may be a magnetic medium (such as a floppy disk, a hard disk and a magnetic tape), an optical medium (such as a digital video disk (DVD)), or a semiconductor medium (such as a solid state disk (SSD)).

Those skilled in the art may understand that various numbers such as first and second involved in present disclosure are distinguished merely for convenience of description, and are not intended to limit the scope of embodiments of the disclo sure, but also to indicate an order of precedence.

At least one in the present disclosure may also be described as one or more, and a plurality of may be two, three, four or more, which is not limited in the present disclosure. In embodiments of the present disclosure, for a kind of technical feature, technical features in the kind of technical feature are distinguished by "first", "second", "third", "A", "B", "C" and "D", and there is no order of precedence or magnitude between technical features described in "first", "second", "third", "A", "B", "C" and "D".

As used herein, the terms "machine-readable medium" and "computer-readable medium" refer to any computer program product, apparatus, and/or means for providing machine instructions and/or data to a programmable processor (for example, a magnetic disk, an optical disk, a memory, a programmable logic device (PLD)), including machine-readable media that receives machine instructions as machine-readable signals. The term "machine-readable signal" refers to any signal used to provide machine instructions and/or data to a programmable processor.

A system and technologies described herein may be implemented in a computing system that includes back-end components (e.g., as a data server), or in a computing system that includes middleware components (e.g., an application server), or in a computing system that includes front-end components (e.g., a user computer having a graphical user interface or web browser through which the user may interact with implementations of the system and technologies described herein), or in a computing system that includes any combination of such back-end components, middleware components, front-end components. The components of the system may be interconnected by any form or medium of digital data communication (e. g., a communications network). Examples of the communication networks include: local area network (LAN), wide area network (WAN), and the Internet.

A computer system may include a client and a server. The client and the server are generally remote from each other and typically interact over the communications network. A relationship of client and server is created by a computer program running on corresponding computers and having a client-server relationship with each other.

It should be understood that various forms of the process shown above may be used, with steps reordered, added or deleted. For example, each step described in the present disclosure can be executed in parallel, sequentially, or in a different order. As long as the desired results of the technical solution disclosed in the present disclosure can be achieved, there is no limitation here.

In addition, it should be understood that various embodiments described in present disclosure can be implemented alone or in combination with other embodiments if the solution allows.

Those skilled in the related art may realize that, in combination with units and algorithm steps of the examples described in embodiments of the present disclosure, may be implemented by an electronic hardware or a combination of an electronic hardware and a computer software. Whether the functions are executed by the hardware or the software depends on a specific application and a design constraint of the technical solution. Those skilled in the art may adopt different methods for each specific application to implement the described functions, but such implementation should not be considered beyond the scope of the present disclosure.

Those skilled in the art may clearly understand that, a specific working process of a system, an apparatus and a unit described above may refer to a corresponding process in the above method embodiments, which will not be repeated here.

The above are only implementations of the disclosure. However, the protection scope of the disclosure is not limited here. Changes and substitutions that may be easily considered by those skilled in the art shall be contained within the protection scope of the present disclosure. Therefore, the protection scope of the disclosure shall be subject to the protection scope of claims.

## Claims

1. An authentication method, performed by a unified data management (UDM) network element, comprising:
receiving a network authentication procedure trigger indication from an authentication server function (AUSF) network element, wherein the network authentication procedure trigger indication comprises an identifier of a user equipment (UE) corresponding to the AUSF network element, and the network authentication procedure trigger indication indicates the UDM network element to trigger a network authentication procedure for the UE, and
sending an authentication notification message to an access and mobility management function (AMF) network element, wherein the authentication notification message comprises the identifier of the UE, and the authentication notification message notifies the AMF network element to perform the network authentication procedure for the UE.

2. The method according to claim 1, wherein the authentication notification message further comprises access type information, and the access type information indicates an access type applicable for the network authentication procedure initiated, the access types comprises 3rd generation partnership project (3GPP) access and/or non-3GPP access.

3. The method according to claim 1 or 2, wherein the network authentication procedure trigger indication and the authentication notification message further comprise an authentication cause for which the AUSF network element requests to trigger the network authentication procedure, and the authentication cause comprises at least one of:
a steering of roaming counter reaching an upper limit; and
a UE parameter update counter reaching an upper limit.

4. The method according to any one of claims 1 to 3, wherein the authentication notification message further comprises a confirmation request indication for requesting an authentication notification acknowledgement message from the AMF network element, and the authentication notification acknowledgement message indicates that the AMF network element has requested the UE to perform the network authentication procedure.

5. An authentication method, performed by an authentication server function (AUSF) network element, and comprising:
sending a network authentication procedure trigger indication to a unified data management (UDM) network element, wherein the network authentication procedure trigger indication comprises an identifier of a user equipment (UE) corresponding to the AUSF network element, and the network authentication procedure trigger indication indicates the UDM network element to trigger a network authentication procedure for the UE.

6. The method according to claim 5, wherein the network authentication procedure trigger indication further comprises an authentication cause for which the AUSF network element requests to trigger the network authentication procedure, and the authentication cause comprises at least one of:
a steering of roaming counter reaching an upper limit; and
a UE parameter update counter reaching an upper limit.

7. The method according to claim 5 or 6, further comprising:
after confirming that the network authentication procedure is completed, generating a new AUSF network element key, and resetting values of the steering of roaming counter and the UE parameter update counter.

8. An authentication method, performed by an access and mobility management function (AMF) network element, comprising:
receiving an authentication notification message from a unified data management (UDM) network element, wherein the authentication notification message comprises an identity of a user equipment (UE), and the authentication notification message notifies the AMF network element to perform a network authentication procedure for the UE;
sending an authentication request to the UE via an NAS connection between the AMF network element and the UE, wherein the authentication request requests the UE to perform the network authentication procedure; and
receiving an authentication response from the UE, wherein the authentication response comprises information required to perform the network authentication procedure.

9. The method according to claim 8, further comprising:
sending a paging message to the UE to create the NAS connection.

10. The method according to claim 8 or 9, wherein the authentication notification message further comprises a confirmation request indication for requesting an authentication notification acknowledgement message from the AMF network element, and the method further comprises:
sending the authentication notification acknowledgement message to the UDM network element, wherein the authentication notification acknowledgement message indicates that the AMF network element has requested the UE to perform the network authentication procedure.

11. The method according to any one of claims 8-10, further comprising:
performing security protection on the authentication request based on an NAS security context locally stored.

12. The method according to claim 11, further comprising:
updating the NAS security context locally stored after the network authentication procedure is completed.

13. An authentication method, comprising:
sending, by an authentication server function (AUSF) network element, a network authentication procedure trigger indication to a unified data management (UDM) network element, wherein the network authentication procedure trigger indication comprises an identifier of a user equipment (UE) corresponding to the AUSF network element, and the network authentication procedure trigger indication indicates the UDM network element to trigger a network authentication procedure for the UE;
sending, by the UDM network element, an authentication notification message to an access and mobility management function (AMF) network element in response to the network authentication procedure trigger indication, wherein the authentication notification message comprises the identity of the UE and notifies the AMF network element to perform the network authentication procedure for the UE;
sending, by the AMF network element, an authentication request to the UE, wherein the authentication request requests the UE to perform the network authentication procedure; and
receiving, by the AMF network element, an authentication response from the UE, wherein the authentication response comprises information required to perform the network authentication procedure.

14. The method of claim 13, wherein the authentication notification message comprises a confirmation request indication for requesting an authentication notification acknowledgement message from the AMF network element, and the method further comprises:
sending, by the AMF network element, the authentication notification acknowledgement message to the UDM network element, wherein the authentication notification acknowledgement message indicates that the AMF network element has requested the UE to perform the network authentication procedure.

15. The method of claim 13 or 14, further comprising:
after the network authentication procedure is completed, generating, by the AUSF network element, a new AUSF network element key, and resetting a steering of roaming counter and a UE parameter update counter.

16. The method according to any one of claims 13-15, wherein the authentication notification message and the authentication request further comprise access type information, and the access type information indicates an access type applicable for the network authentication procedure initiated, the access types comprises 3rd generation partnership project (3GPP) access and/or non-3GPP access.

17. The method according to any one of claims 13-16, wherein the network authentication procedure trigger indication and the authentication notification message further comprise an authentication cause for which the AUSF network element requests to trigger the network authentication procedure, and the authentication cause comprises at least one of:
a steering of roaming counter reaching an upper limit; and
a UE parameter update counter reaching an upper limit.

18. An authentication apparatus, for a unified data management (UDM) network elements, comprising a transceiver module, configured to:
receive a network authentication procedure trigger indication from an authentication server function (AUSF) network element, wherein the network authentication procedure trigger indication comprises an identifier of a user equipment (UE) corresponding to the AUSF network element, and the network authentication procedure trigger indication indicates the UDM network element to trigger a network authentication procedure for the UE; and
send an authentication notification message to an access and mobility management function (AMF) network element, wherein the authentication notification message comprises the identifier of the UE, and the authentication notification message notifies the AMF network element to perform the network authentication procedure for the UE.

19. An authentication apparatus, for a network authentication server function (AUSF) network element, comprising a transceiver module, configured to:
send a network authentication procedure trigger indication to a unified data management (UDM) network element, wherein the network authentication procedure trigger indication comprises an identifier of a user equipment (UE) corresponding to the AUSF network element, and the network authentication procedure trigger indication indicates the UDM network element to trigger a network authentication procedure for the UE.

20. An authentication apparatus, for an access and mobility management function (AMF) network element, comprising a transceiver module, configured to:
receive an authentication notification message from a unified data management (UDM) network element, wherein the authentication notification message comprises an identity of a user equipment (UE), and the authentication notification message notifies the AMF network element to perform a network authentication procedure for the UE;
send an authentication request to the UE via an NAS connection between the AMF network element and the UE, wherein the authentication request requests the UE to perform the network authentication procedure; and
receive an authentication response from the UE, wherein the authentication response comprises information required to perform the network authentication procedure.

21. An authentication system comprising an authentication server function (AUSF) network element, a unified data management (UDM) network element, and an access and mobility management function (AMF) network element, wherein,
the AUSF network element is configured to send a network authentication procedure trigger indication to a unified data management (UDM) network element, wherein the network authentication procedure trigger indication comprises an identifier of a user equipment (UE) corresponding to the AUSF network element, and the network authentication procedure trigger indication indicates the UDM network element to trigger a network authentication procedure for the UE;
the UDM network element is configured to receive the network authentication procedure trigger indication from the AUSF network element, and send an authentication notification message to the AMF network element in response to the network authentication procedure trigger indication, wherein the authentication notification message comprises the identity of the UE and notifies the AMF network element to perform the network authentication procedure for the UE;
the AMF network element is configured to send an authentication request to the UE and receive an authentication response from the UE, wherein the authentication request requests the UE to perform the network authentication procedure, and the authentication response comprises information required to perform the network authentication procedure.

22. A communication device, comprising a transceiver, a memory, and a processor, coupled to the transceiver and the memory respectively, and configured to execute computer executable instructions stored in the memory, control transmission and reception of wireless signals of the transceiver, and be able to implement the method described in any one of claims 1 to 17.

23. A computer storage medium for storing computer executable instructions, wherein, when the computer executable instructions are executed by a processor, the method according to any one of claims 1 to 17 is implemented.
